# EUROPÄISCHE PATENTANMELDUNG

(11) **EP 1 405 660 A1**
(43) Veröffentlichungstag der Anmeldung: **07.04.2004**
(21) Anmeldenummer: 03021871.3
(22) Anmeldetag: 27.09.2003
(51) Int. Cl.: B01D 46/24

(54) **Reststaubfiltervorrichtung**

(30) Priorität: 02.10.2002 DE 10246991
(71) Anmelder: Neuman & Esser GmbH Mahl- und Sichtsysteme, 52531 Übach-Palenberg (DE)
(72) Erfinder: Schwamborn, Karl-Heinz, 53844 Troisdorf (DE); Carduck, Claudia, 52066 Aachen (DE)
(74) Vertreter: Fuchs Mehler Weiss & Fritzsche

(57) **Zusammenfassung**

Es wird eine Reststaubfiltervorrichtung mit einem druckstoßfesten, ein Gehäuseunterteil (30) und einen Gehäusedeckel (31) aufweisenden Filtergehäuse (11) beschrieben, in dem eine mit Filterelementen (13) bestückte Kopfplatte angeordnet ist, die den Innenraum des Filtergehäuses in einen Rohgasraum (14) und in einen Reingasraum (16) unterteilt, die jeweils über einen Rohgaseinlass (15) und einen Reingasauslass (17) verfügen. Mindestens ein Teil des Gebläses (40) ist im Reingasraum (16) des Filtergehäuses (11) angeordnet, so dass die druckstoßfeste Ausführung des Filtergehäuses auch gleichzeitig zur Schallisolierung des Gebläses genutzt werden kann. Die üblicherweise für die Schallisolierung des Gebläses notwendigen Maßnahmen können in der Regel entfallen.

## Beschreibung

Die Erfindung betrifft eine Reststaubfiltervorrichtung gemäß dem Oberbegriff des Patentanspruchs 1.

Derartige Filtervorrichtungen sind an Zerkleinerungsmaschinen angeschlossen, denen in der Regel ein Zyklonabscheider für die Abtrennung von Feinstäuben nachgeschaltet ist. Da jedoch hinter dem Zyklonabscheider noch feine Reststäube in der Trägerluft verbleiben, ist es erforderlich, diese ebenfalls aufzufangen und aus der Luft herauszufiltern. Die Reststaubfiltervorrichtung bildet das letzte Glied in einer Kette, bevor die im Gesamtsystem befindliche Luft an die Atmosphäre abgegeben wird.

Die bekannten Reststaubfiltervorrichtungen bestehen, wie z.B. in Sonderdruck aus "Schüttgut", 5. Jahrgang Nr. 3, Juli/September 1999, mit dem Titel "Feinmahlanlage mit Prallsichtermühle und Zyklonsichter" von Marc Giersemehl und Günter Plihal beschrieben wird, aus der eigentlichen Filtervorrichtung, an die ausgangsseitig ein Gebläse oder Ventilator angeschlossen ist, der in der Regel auf dem Dach des Gebäudes aufgestellt ist.

Die Filtervorrichtung besteht im wesentlichen aus einem zylindrischen Filtergehäuse, das durch eine Kopfplatte, in die von außen anströmbare Filterelemente angeordnet und gehalten sind, in zwei Kammern aufgeteilt ist, wobei der Raum, in den sich die Filterelemente erstrecken, als Rohgasraum und der Raum oberhalb der Kopfplatte als Reingasraum bezeichnet wird.

Der Rohgasraum ist an den Zyklonabscheider oder die Mahlanlage angeschlossen und verfügt am unteren Ende über einen Ausgang zum Austragen der herausgefilterten Reststäube.

Der Reingasraum ist mit einem abnehmbaren Deckel verschlossen, der über eine Reingasleitung mit dem Gebläse verbunden ist. Die gesamte Filtervorrichtung mit der Reingasleitung muss druckstoßfest ausgelegt sein, wobei alle Komponenten einer durch eine Staubexplosion ausgelösten Druckwelle von beispielsweise bis zu 11 bar standhalten müssen. Um das Gebläse vor einer solchen Druckwelle zu schützen, ist in der Reingasleitung vor dem Gebläse ein Explosionsschutzventil angeordnet.

Wegen der durch das Gebläse verursachten großen Lärmbelästigung ist das Gebläse selbst schallgeschützt ausgeführt und mit einem entsprechend isolierten Gebläsegehäuse versehen. Darüber hinaus verfügt das Gebläse sowohl über einen Ansaugschalldämpfer als auch über einen Ausblasschalldämpfer. Da solche Gebläse Lärm in der Größenordnung von 90 dB erzeugen, ist ein entsprechend großer Aufwand für die Schallisolierung erforderlich, der mit einem entsprechend großen Gewicht für diese Komponenten einhergehen kann, so dass eine Verstärkung des tragenden Untergrunds notwendig werden könnte. Wenn das Gebläse auf dem Dach eines Gebäudes aufgestellt ist, sind dementsprechend besondere Anforderungen an die Tragfähigkeit des Daches zu stellen.

Es ist daher Aufgabe der Erfindung, eine Filtervorrichtung mit Gebläse bereitzustellen, mit der die oben genannten Nachteile vermieden werden und mit der auf einfache Weise den Anforderungen an die Schallisolation genügt wird.

Diese Aufgabe wird mit einer Filtervorrichtung gemäß den Merkmalen des Patentanspruchs 1 gelöst.

Die teilweise oder vollständige Integration des Gebläses in den Reingasraum hat den Vorteil, dass die druckstoßfeste Ausführung des Filtergehäuses auch gleichzeitig die Schallisolierung des Gebläses übernimmt, so dass die üblicherweise für die Schallisolation des Gebläses notwendigen Maßnahmen in der Regel entfallen können.

Ein Gebläse besteht aus mehreren Komponenten, deren Lärmemission unterschiedlich ist. Die dominierenden Komponenten sind in der Regel der Motor und das Laufrad, wobei das Laufrad den größten Lärmbeitrag leistet. Insofern wird unter dem Teil des Gebläses, der im Reingasraum angeordnet ist, der Teil oder die Komponente/Komponenten des Gebläses verstanden, die am meisten zur Lärmentwicklung beiträgt/beitragen.

Darüber hinaus wird ein vor dem Gebläse angeordneter saugseitiger Schalldämpfer, eine druckstoßfeste Reingasleitung und das üblicherweise vorhandene Explosionsschutzventil eingespart.

Die Erfindung schließt nicht aus, dass zusätzliche schallisolierende Maßnahmen wie z. B. saugseitiger Schalldämpfer, Ausblasschalldämpfer oder Motorgehäuse vorgesehen sein können, wenn es auf Grund der Umgebungsbedingungen notwendig sein sollte, die Lärmbelästigung unter das durch die erfindungsgemäßen Maßnahmen bereits erreichte Maß zu reduzieren. Dies hängt u. a. auch an der Dimensionierung des Gebläses und der Größe der Filtervorrichtung ab.

Ein weiterer Vorteil besteht darin, dass durch den Wegfall des Gebläses und der dazugehörigen Schallisolation die Belastung der Decke oder des Dachs verringert wird.

Um das Gebläse teilweise oder vollständig in dem Filtergehäuse integrieren zu können, ist es erforderlich, den Reingasraum entsprechend zu vergrößern. Zu diesem Zweck ist zwischen dem Gehäuseunterteil und dem Gehäusedeckel ein druckstoßfestes Gehäusezwischenteil angeordnet, das das Gebläse aufnimmt. Dieses Gehäusezwischenteil kann ein eigenständiges Bauteil sein oder gemäß einer bevorzugten Ausführungsform mit dem Gehäusedeckel eine Einheit bilden. Die einteilige Ausführung hat den Vorteil, dass die Demontage vereinfacht wird.

Die Filtervorrichtung selbst wird durch die Integration des Gebläses wegen des notwendigen Platzbedarfes etwas höher, was in der Regel kein Problem darstellt, als in bestehenden Gebäuden ausreichend Abstand zur Decke oder zum Dach vorhanden ist und darüber hinaus die Möglichkeit besteht, derartige Filtervorrichtungen in den vorhandenen Gebäuden auch an einer tieferen Stelle anzuordnen.

Insgesamt wird eine kompakte Einheit geschaffen, deren Handhabung, insbesondere die Wartung, vereinfacht wird. Dadurch, dass das Gebläse nicht auf dem Dach angeordnet ist, können die Wartungsarbeiten an Ort und Stelle der Filtervorrichtung durchgeführt werden.

Um Wartungsarbeiten an dem Gebläse vornehmen zu können, ist es von Vorteil, wenn das Gebläse mit dem Deckel und/oder Gehäusezwischenteil, was nachfolgend als Gehäuseoberteil bezeichnet wird, abgenommen werden kann. Hierzu kann beispielsweise ein ohnehin für das Versetzen von Zyklonabscheidern vorhandener Drehkran eingesetzt werden.

Zu diesem Zweck ist in dem Gehäuseoberteil vorzugsweise eine Bodenwand angeordnet, auf der das Gebläse befestigt ist. Es kann sich bei dieser Bodenwand beispielsweise um einen Stahlprofilkranz handeln, der lösbar befestigt ist. Die Bodenwand ist vorzugsweise mit dem Gehäuseoberteil verschraubt, wobei die Verschraubung möglichst von außen zugänglich ist. Das Oberteil kann somit nach dem Abheben vom Unterteil der Filtervorrichtung von der Bodenwand abgenommen werden, so dass das Gebläse für Wartungsarbeiten oder Reparaturen zugänglich ist.

Zwischen dem Gebläse und der Bodenwand können Dämpfungselemente angeordnet sein. Auch diese Maßnahme trägt zur Lärmminderung bei.

Der Gebläseausgang ist vorzugsweise an dem Reingasauslass des Filtergehäuses angeschlossen, wobei der Reingasauslass mit einem Ausblasschalldämpfer verbunden sein kann. Je nach Einbaulage des Gebläses kann der Gebläseausgang auch an anderer Stelle nach außen geführt werden oder unmittelbar mit dem Ausblasschalldämpfer verbunden sein. Es kann auch ein Ausblasdiffuser zwischengeschaltet werden. Da die nachgeordneten Komponenten, wie Verbindungsrohre, Ausblasschalldämpfer usw. starr montiert sind, ist es von Vorteil, wenn der Gebläseausgang eine elastische Manschette aufweist.

Gemäß einer ersten Ausführungsform ist das Gebläse vollständig im Reingasraum untergebracht. Hierbei kann das Gebläse mit seinem ohnehin vorhandenen schallisolierten Gehäuse in den Reingasraum eingebaut werden. Es besteht aber auch die Möglichkeit, das Gebläse ohne ein solches schallisolierendes Gehäuse einzubauen, so dass es auf die notwendigen Komponenten reduziert ist. Die dadurch erhöhte Lärmentwicklung kann in Kauf genommen werden, weil das druckstoßfeste Filtergehäuse für die entsprechende Schallisolierung sorgt.

Gemäß einer weiteren Ausführungsform kann das Gehäuseoberteil eine Öffnung aufweisen, die mittels einer druckstoßfesten Verschlussplatte verschlossen wird. Das Gebläse ist vorzugsweise an der Innenseite dieser Verschlussplatte angeordnet und kann somit zusammen mit der Verschlussplatte aus der Filtervorrichtung ausgebaut werden. Diese Ausführungsform bietet sich überall dort an, wo kein Kran zur Verfügung steht.

Eine weitere Ausführungsform, die dem Wartungsgesichtspunkt noch stärker Rechnung trägt, sieht vor, dass der Ansaugstutzen und das Laufrad des Gebläses an der Innenseite der Verschlussplatte und der Motor an der Außenseite der Verschlussplatte angeordnet ist. Die lärmintensiven Komponenten befinden sich somit nach wie vor im Inneren des Reingasraumes, während lediglich der Motor, der für die Lärmentwicklung eher eine untergeordnete Rolle spielt, an der Außenseite angeordnet ist und somit frei zugänglich ist.

Um das im Innenraum befindliche Gebläse optisch überprüfen zu können, ist eine Inspektionsöffnung vorgesehen, die vorzugsweise auf der gegenüberliegenden Seite der Öffnung angebracht ist, wo das Gebläse angeordnet ist. Diese Inspektionsöffnung kann auch so groß sein, dass durch diese Öffnung Wartungsarbeiten am Gebläse durchgeführt werden können.

Beispielhafte Ausführungsformen der Erfindung werden nachfolgend anhand der Zeichnungen näher erläutert.

Es zeigen:
- Figur 1: eine Seitenansicht einer Filtervorrichtung mit Zyklonabscheider gemäß einer ersten Ausführungsform,
- Figur 2: die in der Figur 1 gezeigte Ausführungsform mit abgenommenem Gehäuseoberteil,
- Figur 3: einen Horizontalschnitt durch die in Figur 1 gezeigte Ausführungsform,
- Figur 4: einen Vertikalschnitt durch ein Gehäuseoberteil einer Filtervorrichtung gemäß einer weiteren Ausführungsform,
- Figur 5: einen Vertikalschnitt durch ein Gehäuseoberteil mit Gebläse gemäß einer weiteren Ausführungsform und
- Figur 6: einen Vertikalschnitt durch ein Gehäuseoberteil mit Gebläse gemäß einer weiteren Ausführungsform.

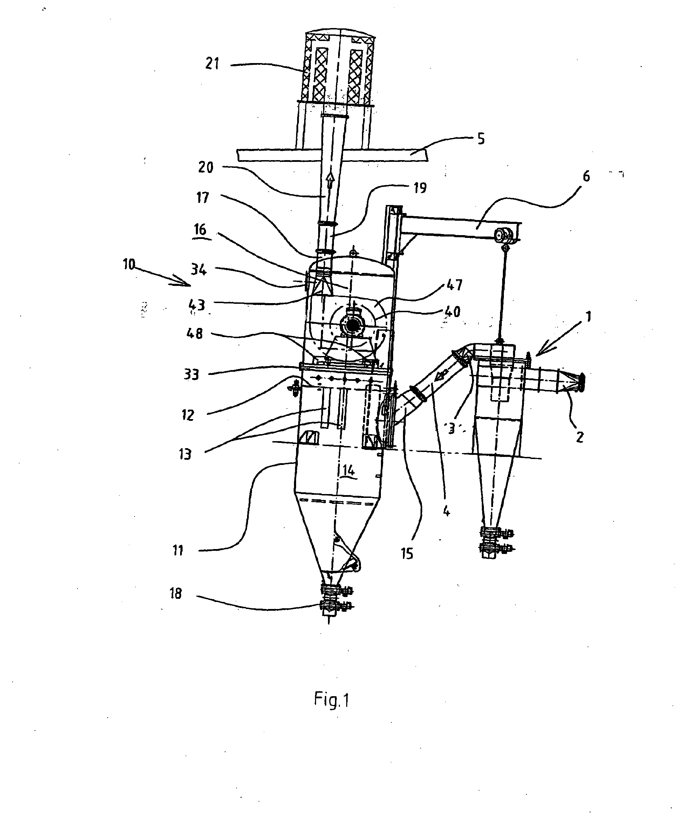

In der Figur 1 ist eine Filtervorrichtung 10 mit vorgeschaltetem Zyklonabscheider 1 dargestellt. Der Zyklonabscheider besitzt einen Anschluss 2 für eine vorgeschaltete Mahlanlage, die nicht dargestellt ist. Mittels des Zyklonabscheiders 1 werden Feinstäube abgetrennt und die verbleibenden feinen Reststäube werden durch den Auslaß 3 über ein Verbindungsrohr 4 dem Rohgaseinlass 15 der Filtervorrichtung 10 zugeführt.

Das Filtergehäuse 11 der Filtervorrichtung 10 ist im wesentlichen zylindrisch ausgebildet und geht im unteren Bereich in einen Konus mit einem Staubauslass 18 über. Das Filtergehäuse 11 besteht aus einem Gehäuseunterteil 30 und einem Gehäusedeckel 31 sowie einem Gehäusezwischenteil 32, das zwischen dem Deckel 31 und dem Gehäuseunterteil 30 angeordnet ist. In dieser und in allen folgenden Ausführungsformen bilden der Gehäusedeckel 31 und das Gehäusezwischenteil 32 ein gemeinsames Bauteil.

Im Innern des Filtergehäuses 11 ist eine Kopfplatte 12 horizontal angeordnet, die mit von außen anströmbaren Filterelementen 13 bestückt ist. Unterhalb dieser Kopfplatte befindet sich der Rohgasraum 14, in den das Rohgas über den Rohgaseinlass 15 einströmt. Das durch die Filterelemente 13 gefilterte Rohgas tritt nach oben als Reingas in den Reingasraum 16 aus. Durch das Gehäusezwischenteil 32 ist im Vergleich zum Stand der Technik der Reingasraum 16 soweit vergrößert, dass er das Gebläse 40 aufnimmt, das auf einer oberhalb und parallel zur Kopfplatte 12 angeordneten Bodenwand 33 über Dämpfungselemente 48 befestigt ist. Das Ansaugrohr (nicht dargestellt) erstreckt sich in Richtung Kopfplatte 12 und saugt das Reingas an, das über den Innenraum des Schneckengehäuses 47 dem Gebläseausgang 43 zugeführt wird, der an den Reingasauslass 17 über eine elastische Verbindungsmanschette angeschlossen ist. Der Reingasauslass 17 ist mit einem Verbindungsrohr 19 an den Ausblasdiffuser 20 angeschlossen. Dieser Ausblasdiffuser 20 erstreckt sich durch das Dach 5 des Gebäudes, in dem sich die Filtervorrichtung befindet. Auf dem Dach ist ein Ausblasschalldämpfer 21 an den Ausblasdiffuser 20 angeschlossen. Dieser Ausblasschalldämpfer 21 kann auch weggelassen werden.

Der Gebläseausgang 43 besteht im Wesentlichen aus einem Übergangsrohr, um den rechteckigen Querschnitt des Schneckengehäuseausgangs auf einen runden Querschnitt zu überführen. Wenn der Durchmesser des Filtergehäuses es notwendig machen sollte, kann das Schneckengehäuse 47 auch im Durchmesser verkleinert und entsprechend angepasst werden, wobei in diesem Falle der Gebläseausgang 43 um 90° gedreht wird, so dass sich die Längsrichtung des rechteckigen Querschnitts in Achsrichtung des Gebläsemotors entsteht. Durch diese Maßnahme wird Platz in radialer Richtung eingespart, so dass die Integration eines Gebläses auch in kleinere Filtergehäuse ermöglicht wird.

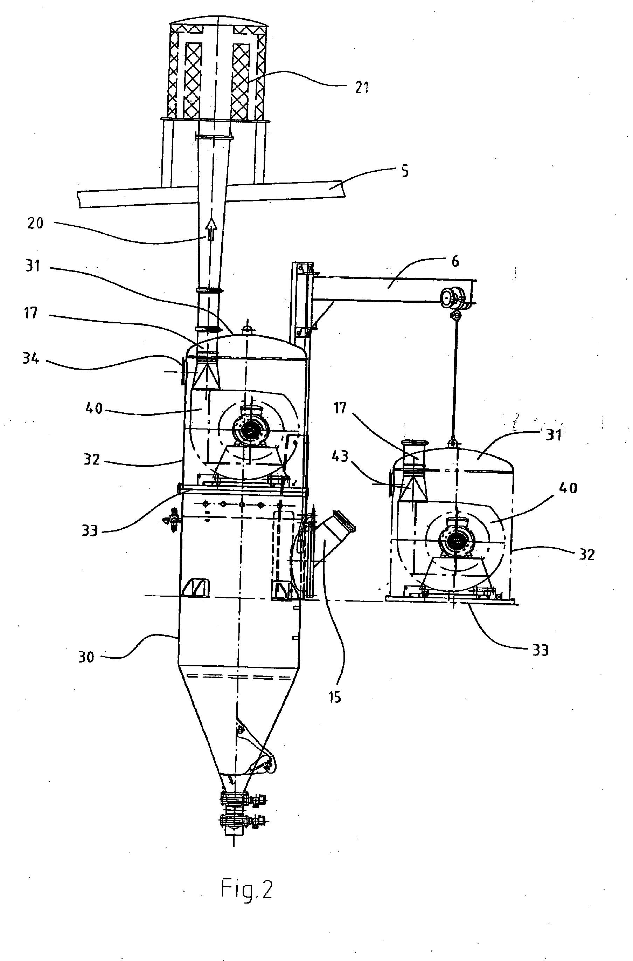

Durch die druckstoßfeste Ausführung des Filtergehäuses 11 wird auch gleichzeitig eine Schallisolierung gewährleistet, so dass keine zusätzlichen Maßnahmen zur Schallisolierung des in dem Reingasraum 16 angeordneten Gebläses 40 notwendig sind. Für Wartungsarbeiten ist ein Kran 6 vorgesehen, der zum einen zum Versetzen des Zyklonabscheiders 1 und zum anderen zum Abheben des Gehäuseoberteils zusammen mit dem eingebauten Gebläse 40 vorgesehen ist, wie dies in Figur 2 dargestellt ist.

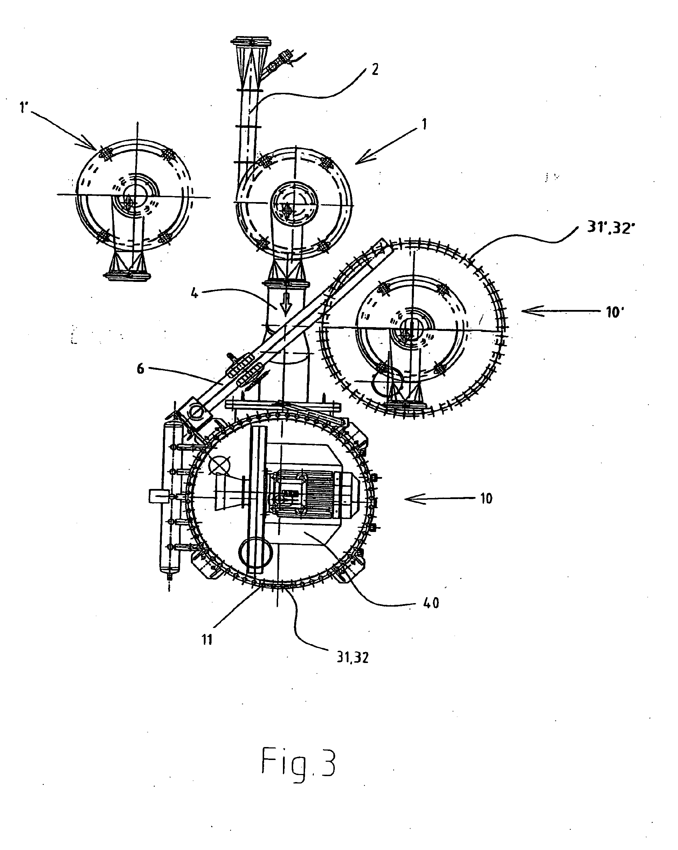

In der Draufsicht der Figur 3 wird dies noch einmal verdeutlicht, wobei der versetzte Zyklonabscheider mit 1' und die verschwenkte Filtervorrichtung mit 10' und das entsprechende Gehäuseoberteil mit 31', 32' gekennzeichnet sind. In dieser Figur ist zu sehen, dass das Gebläse 40 vollständig im Innenraum des Filtergehäuses 11 angeordnet ist.

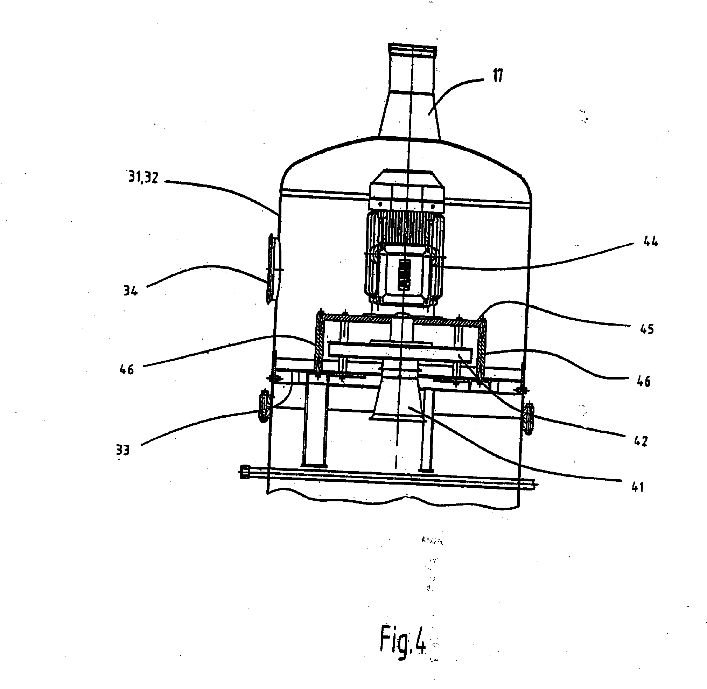

In der Figur 4 ist eine weitere Ausführungsform dargestellt, die sich von der in den Figuren 1 bis 3 gezeigten Ausführungsform im wesentlichen dadurch unterscheidet, dass das Gebläse 40 kein Schneckengehäuse aufweist. Der Motor ist auf einer Zwischenplatte 45 befestigt, die mittels Stehbolzen 46 auf der Bodenwand 33 angeordnet ist. Es wird dadurch zwischen der Bodenwand 33 und der Zwischenplatte 45 ein Raum gebildet, in dem das Laufrad 42 angeordnet ist. Das Ansaugrohr 41 erstreckt sich senkrecht nach unten durch die Bodenwand 33. Der Vorteil dieser Ausführungsform besteht darin, dass das Gebläse 40 auf die absolut notwendigen Komponenten reduziert wurde, wodurch die Herstellung weitaus kostengünstiger gestaltet werden kann. Auf sämtliche schallisolierenden Maßnahmen des Gebläses 40 wurde verzichtet, was dadurch möglich ist, dass das Filtergehäuse 11 selbst ausreichend schallisolierend wirkt.

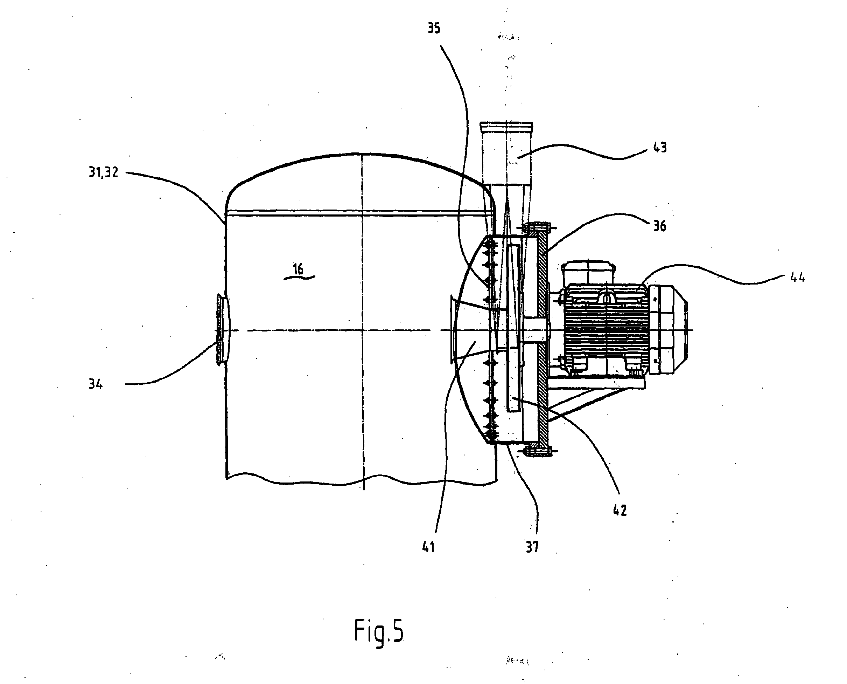

In der Figur 5 ist eine weitere Ausführungsform dargestellt, bei der im Gehäusezwischenteil 32 eine Öffnung 35, z.B. in Form eines Mannloches, vorgesehen ist, an dem ein Ringflansch 37 angeschraubt ist, der eine druckstoßfeste Verschlussplatte 36 trägt. An dieser Verschlussplatte 36 ist an der Außenseite der Motor 44 des Gebläses 40 angeordnet und die Ausgangswelle erstreckt sich durch die Platte 36 nach innen, wo das Laufrad 42 und das Ansaugrohr 41 angeordnet sind. Bei dieser Ausführungsform erstrecken sich Teile des Gebläses 40 in den Reingasraum 16, während der Motor 44 außerhalb angeordnet ist und somit für Wartungsarbeiten leicht zugänglich ist. Da die Lärmentwicklung im wesentlichen durch das Laufrad 42 erzeugt wird, ist die Lärmbelästigung relativ gering, weil das druckstoßfeste Gehäuse 1 mit der druckstoßfesten Verschlussplatte 36 für eine ausreichende Schallisolation sorgt.

Bei Bedarf kann der Motor 44 noch ein zusätzliches lärmisolierendes Gehäuse aufweisen.

In der Wand des Gehäusezwischenteils 32 ist eine Inspektionsöffnung 34 vorgesehen, die beispielsweise auf der gegenüberliegenden Seite angebracht sein kann.

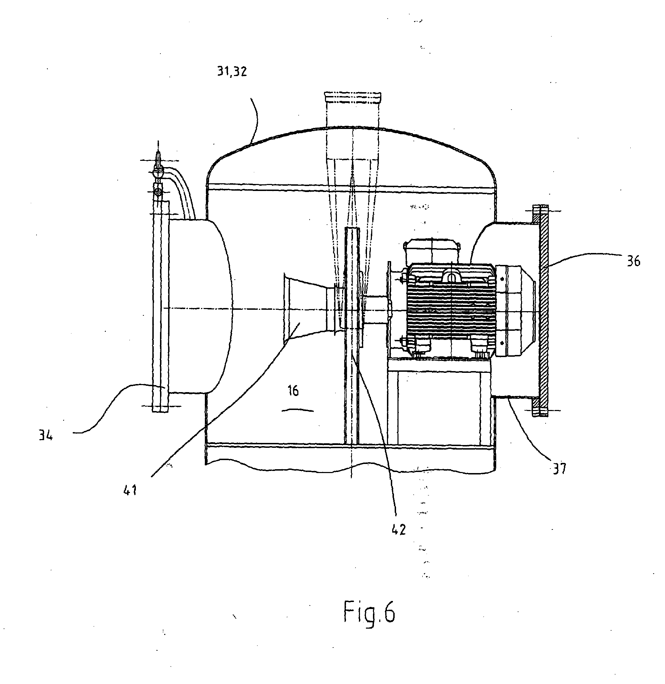

In der Figur 6 ist eine weitere Ausführungsform dargestellt, die im Prinzip bezüglich der Öffnung 35 der in der Figur 5 gezeigten Darstellung entspricht, mit der Ausnahme, dass an der Innenseite der Verschlussplatte 36 das Gebläse 40 mit dem Motor 44 angebracht ist. Bei dieser Ausführungsform befinden sich alle Bauteile innerhalb des Reingasraums 16. Für Wartungsarbeiten ist auf der gegenüberliegenden Seite eine Inspektionsöffnung 34 vorgesehen, die ebenfalls in Form eines Mannloches ausgestaltet ist und somit die volle Zugänglichkeit zum Gebläse 40 gewährleistet.

### Bezugszeichen

- 1, 1': Zyklonabscheider
- 2: Anschluss für Mahlanlage
- 3: Auslass
- 4: Verbindungsrohr
- 5: Dach
- 6: Kran
- 10, 10': Filtervorrichtung
- 11: Filtergehäuse
- 12: Kopfplatte
- 13: Filterelement
- 14: Rohgasraum
- 15: Rohgaseinlass
- 16: Reingasraum
- 17: Reingasauslass
- 18: Staubauslass
- 19: Verbindungsrohr
- 20: Ausblasdiffuser
- 21: Ausblasschalldämpfer
- 30: Gehäuseunterteil
- 31, 31': Gehäusedeckel
- 32, 32': Gehäusezwischenteil
- 33: Bodenwand
- 34: Inspektionsöffnung
- 35: Öffnung
- 36: Verschlussplatte
- 37: Ringflansch
- 40: Gebläse
- 41: Ansaugrohr
- 42: Laufrad
- 43: Gebläseausgang
- 44: Motor
- 45: Zwischenplatte
- 46: Stehbolzen
- 47: Scheckengehäuse
- 48: Dämpfungselement

## Patentansprüche

1. Reststaubfiltervorrichtung mit einem druckstoßfesten, ein Gehäuseunterteil (30) und einen Gehäusedeckel (31) aufweisenden Filtergehäuse (11), in dem eine mit Filterelementen (13) bestückte Kopfplatte (12) angeordnet ist, die den Innenraum des Filtergehäuses (11) in einen Rohgasraum (14) und in einen Reingasraum (16) unterteilt, die jeweils über einen Rohgaseinlass (15) und einen Reingasauslass (17) verfügen, mit einem Gebläse (40), **dadurch gekennzeichnet, dass** mindestens ein Teil des Gebläses (40) im Reingasraum (16) des Filtergehäuses (11) angeordnet ist.

2. Vorrichtung nach Anspruch 1, **dadurch gekennzeichnet, dass** zwischen dem Gehäuseunterteil (30) und dem Gehäusedeckel (31) ein druckstossfestes Gehäusezwischenteil (32) angeordnet, das das Gebläse (40) aufnimmt.

3. Vorrichtung nach Anspruch 2, **dadurch gekennzeichnet, dass** der Gehäusedeckel (31) und das Gehäusezwischenteil (32) eine Einheit bilden.

4. Vorrichtung nach einem der Ansprüche 2 oder 3, **dadurch gekennzeichnet, dass** in dem Gehäusezwischenteil (32) eine Bodenwand (33) angeordnet ist, auf der das Gebläse (40) befestigt ist.

5. Vorrichtung nach Anspruch 4, **dadurch gekennzeichnet, dass** zwischen dem Gebläse (40) und der Bodenwand (33) Dämpfungselemente (47) angeordnet sind.

6. Vorrichtung nach einem der Ansprüche 1 bis 5, **dadurch gekennzeichnet, dass** der Ausgang (43) des Gebläses (40) an den Reingasauslass (17) angeschlossen ist, der mit dem Ausblasschalldämpfer (21) verbunden ist.

7. Vorrichtung nach einem der Ansprüche 1 bis 6, **dadurch gekennzeichnet, dass** zwischen dem Reingasauslass (17) und dem Ausblasschalldämpfer (21) ein Ausblasdiffuser (20) angeschlossen ist.

8. Vorrichtung nach einem der Ansprüche 1 bis 7, **dadurch gekennzeichnet, dass** das Gebläse (40) vollständig im Reingasraum (16) untergebracht ist.

9. Vorrichtung nach Anspruch 8, **dadurch gekennzeichnet, dass** das Gebläse (40) ein schallisoliertes Gehäuse aufweist.

10. Vorrichtung nach einem der Ansprüche 1 bis 9, **dadurch gekennzeichnet, dass** das Gehäusezwischenteil (32) eine mit einer druckstoßfesten Verschlussplatte (36) verschließbare Öffnung (35) aufweist und dass das Gebläse (40) an der Innenseite der Verschlussplatte (36) angeordnet ist.

11. Vorrichtung nach einem der Ansprüche 1 bis 9, **dadurch gekennzeichnet, dass** das Gehäusezwischenteil (32) eine mit einer druckstoßfesten Verschlussplatte (36) verschließbare Öffnung (35) aufweist und dass das Ansaugrohr (41) und das Laufrad (42) des Gebläses (40) an der Innenseite der Verschlussplatte (36) und der Motor (44) an der Außenseite der Verschlussplatte (36) angeordnet ist.

12. Vorrichtung nach einem der Ansprüche 1 bis 11, **dadurch gekennzeichnet, dass** gegenüberliegend der Öffnung (35) eine Inspektionsöffnung (34) angeordnet ist.
